(19) Europäisches Patentamt
European Patent Office
Office européen des brevets

(11) **EP 3 992 562 A1**

(12) **EUROPÄISCHE PATENTANMELDUNG**

(43) Veröffentlichungstag:
**04.05.2022  Patentblatt 2022/18**

(21) Anmeldenummer: **20205452.4**

(22) Anmeldetag: **03.11.2020**

(51) Internationale Patentklassifikation (IPC):
**F27D 21/00** *(2006.01)*     **F27D 21/02** *(2006.01)*
**G01B 11/02** *(2006.01)*     **F27B 7/42** *(2006.01)*

(52) Gemeinsame Patentklassifikation (CPC):
**F27D 21/00; F27B 7/42; F27D 21/02; G01B 11/026**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **KIMA Process Control GmbH**
**52428 Jülich (DE)**

(72) Erfinder: **Kalkert, Peter**
**52428 Jülich (DE)**

(74) Vertreter: **FARAGO Patentanwälte**
**Thierschstraße 11**
**80538 München (DE)**

(54) **OPTISCHE MESSVORRICHTUNG MIT TRIGONOMETRISCHER AUSWERTUNG**

(57)    Die Erfindung betrifft eine Messvorrichtung (1) zur optischen Messung eines Abstands (DM) der Messvorrichtung zu einer der Messvorrichtung zugewandten Oberfläche (21) eines Messobjektes (2) mittels einer trigonometrischen Auswertung von korrelierten Messpunkten (M1, M2, MK), eines Messsystems (10) mit einer solchen Messvorrichtung, einer Drehrohrofenanlage (100) mit einer solchen Messvorrichtung bzw. eines solchen Messsystems, ein Verfahren (200) zum Betreiben eines solchen Messvorrichtung sowie eines Verfahren (300) zum Steuern einer solchen Drehrohrofenanlage mit einem mittels einer solchen Messvorrichtung bestimmten Abstand als eine der Steuergrößen.

Fig.1

EP 3 992 562 A1

## Beschreibung

### Gebiet der Erfindung

Die Erfindung betrifft eine Messvorrichtung zur optischen Messung eines Abstands der Messvorrichtung zu einer der Messvorrichtung zugewandten Oberfläche eines Messobjektes mittels einer trigonometrischen Auswertung von korrelierten Messpunkten, eines Messsystems mit einer solchen Messvorrichtung, einer Drehrohrofenanlage mit einer solchen Messvorrichtung bzw. eines solchen Messsystems, ein Verfahren zum Betreiben eines solchen Messvorrichtung sowie eines Verfahren zum Steuern einer solchen Drehrohrofenanlage mit einem mittels einer solchen Messvorrichtung bestimmten Abstand als eine der Steuergrößen.

### Hintergrund der Erfindung

Drehöfen werden für kontinuierliche Prozesse in der Verfahrenstechnik verwendet. Ein Drehrohrofen besteht in der Regel aus einem zum Teil viele Meter oder einige zehn Meter langen zylinderförmigen Drehrohr mit einem Ofenmantel in der Regel aus Metall. Hierbei ist der Ofenmantel leicht geneigt, um mit dem Umlauf des Ofenmantels einen Transport des Materials innen längs der Drehachse des Ofenmantels im Ofen von der höheren Einlaufseite zur niedrigeren Auslaufseite herbeizuführen, das als prozessiertes Brenngut den Drehrohrofen verlässt. Das zu bearbeitenden Material kann unterschiedlich sein, beispielsweise Feststoffe, Gesteine, Schlämme oder Pulver. Die benötigte Prozesstemperatur kann in den Drehöfen direkt oder indirekt erzeugt werden. Bei Materialien, die eine hohe Prozesstemperatur benötigen, wird der Drehrohrofen direkt, beispielsweise durch eine Lanze als Brenner an der Auslaufseite des Drehrohrofens, die in etwa mittig im Drehrohr angeordnet ist, beheizt. Direkt beheizte Drehöfen werden beispielsweise für die Zementherstellung, für ein Kalkbrennen, das Schmelzen von keramischen Gläsern, Erschmelzen von Metallen, Eisenerzreduktion, Aktivkohleherstellung, Herstellung von Titanoxyd oder Aluminiumoxyd und andere Anwendungen verwendet. Die direkt beheizten Drehöfen werden dabei bei sehr heißen Temperaturen betrieben. Beispielsweise werden bei der Zementherstellung die Rohstoffe, umfassend Kalkstein und Ton, gemahlen und im Drehrohrofen bei ca. 1450° C zu sogenanntem Zementklinker gebrannt und anschließend nach Verlassen des Drehrohrofens abgekühlt und weiterverarbeitet. Die Menge des aus dem Drehrohrofen auf ein Kühlbett (Brenngutauflage) kontinuierlich ausgegebenen Brennguts ist abhängig von den Prozessparametern der vorgelagerten Prozesskette. Für eine qualitativ gute Brenngutproduktion sollte eine nicht zu große und nicht zu kleine Menge an Material im Drehrohrofen prozessiert werden, was proportional zur Menge an Brenngut auf der Brenngutauflage (beispielsweise Zementklinker bei Zement-Drehrohröfen) ist. Würde die Menge an Brenngut auf der Brenngutauflage bekannt sein, könnte die Drehrohrofenanlage so gesteuert werden, dass die Materialmenge im Drehrohrofens für eine gute Brenngutqualität optimiert wird. Da das Brenngut auf der Kühlstrecke in der Regel eine Schmelze mit einer Temperatur von mehr als 1000°C ist, ist die Bestimmung der Materialmenge schwierig. Bisher wurde das auf der Kühlstreckenauflage aufliegende Brenngut indirekt über die Brenngutauflage gewogen oder durch den Stömungswiderstand der von unten in das Brenngut geblasenen Kühlluft abgeschätzt. Dies liefert allerdings für eine entsprechende Steuerung des Drehrohrofens zu ungenaue Daten.

Ebenfalls bekannt sind Messvorrichtungen, die mittels Radar- oder Ultraschallpulsen den Abstand der Oberfläche des Brennguts auf der Kühlstrecke messen. Beide Verfahren haben allerdings Probleme eine eindeutige Oberfläche zu detektieren, wenn sich Staub in der Messstrecke befindet. Die erhaltenen Daten sind dann ebenfalls zu ungenau für eine Ofensteuerung.

Daher wäre es wünschenswert, eine Messvorrichtung und ein entsprechendes Messverfahren zur Verfügung zu haben, mit der zumindest die Menge an Brenngut möglichst genau bestimmt werden kann.

### Zusammenfassung der Erfindung

Der Erfindung liegt die Aufgabe zugrunde, eine Messvorrichtung und ein entsprechendes Messverfahren zur Verfügung zu haben, mit der die Menge an Brenngut möglichst genau bestimmt werden kann.

Die Aufgabe der Erfindung wird gelöst durch eine Messvorrichtung zur optischen Messung eines Abstands der Messvorrichtung zu einer der Messvorrichtung zugewandten Oberfläche eines Messobjektes, wobei die Oberfläche eine örtlich und zeitlich schwankende Helligkeitsverteilung über die Oberfläche zumindest im spektralen Messbereich der Messvorrichtung besitzt, umfassend zumindest zwei räumlich separat angeordnete optische Helligkeitssensoren mit vorbestimmter Entfernung zueinander, die die zeitliche schwankende Helligkeitsverteilung der Oberfläche im spektralen Messbereich lokal detektieren, und zumindest einer beiden Helligkeitssensoren ausrichtungsveränderlich, vorzugsweise verschwenkbar, so angeordnet ist, dass er die zeitliche schwankende Helligkeitsverteilung der Oberfläche des Messobjektes an unterschiedlichen Orten auf der Oberfläche vermisst, um eine erste Reihe an lokalen Messpunkten unterschiedlicher Helligkeitsverteilung zu bestimmen, wobei zumindest durch die Ausrichtungsveränderung, vorzugsweise Verschwenkung, des ersten Helligkeitssensors jeder der lokalen Messpunkte aufgrund einer Messpunkt-abhängigen räumlichen ersten Ausrichtung des ersten Helligkeitssensors die erste Reihe an lokalen Messpunkten des ersten Helligkeitssensors so gestaltet ist, dass zumindest einer dieser lokalen Messpunkte an einem Ort auf der Oberfläche liegt, für den auch der zweite Helligkeitssensor in einer bestimmten zweiten Ausrichtung einen lokalen Messpunkt aufgenommen hat, sodass diese beiden aufgenommenen lokalen Messpunkte einen gemeinsamen, zeitlich korrelierten Messpunkt für denselben Ort auf der Oberfläche darstellen, wobei die Entfernung der Messvorrichtung zu diesem Ort und damit zum Messobjekt aus den sich für die jeweiligen Ausrichtungen ergebenden Winkeln der beiden Helligkeitssensoren zu dem korrelierten Messpunkt und der vorbestimmten Entfernung der Helligkeitssensoren zueinander trigonometrisch mittels einer Auswerteeinheit bestimmt wird, wobei zwei lokale Messpunkte den korrelierten Messpunkt darstellen, bei denen die miteinander verglichenen Helligkeitsverteilungen für die ersten und zweiten Helligkeitssensoren bei einer Korrelationsberechnung ein Maximum an Korrelation bei den verglichenen zeitlich schwankenden Helligkeitsverteilungen besitzen.

Die Oberfläche des Messobjektes kann dabei eine feste Oberfläche sein, wobei die Oberfläche dabei auch zumindest in Bereichen flüssig sein kann. Gegebenenfalls könnte das gesamte Messobjekt und damit auch die gesamte Oberfläche flüssig sein, wobei die Viskosität der Flüssigkeit als Messobjekt von leichtflüssig zu zähflüssig variieren kann, gegebenenfalls auch in einer räumlichen Variation.

Um eine Korrelation zwischen lokalen Messpunkten der ersten und zweiten Helligkeitssensoren feststellen zu können, muss die Helligkeit der Oberfläche des Messobjekts lateral über die Oberfläche ortsabhängig zeitlich schwanken, also eine örtlich unterschiedliche zeitlich schwankende Helligkeitsverteilung besitzen. Hierbei kann das Messobjekt aus sich selbst heraus leuchten (beispielsweise als Schmelze oder entsprechendes glühendes Objekt) oder von einer externen Lichtquelle angeleuchtet werden, sodass die Oberfläche des Messobjekts in Reaktion auf die Lichtquelle leuchtet oder eine Helligkeitsverteilung aufweist, beispielsweise in Reflexion, Fluoreszenz, Phosphoreszenz oder Transmission des externen Lichts. Entscheidend für die erfindungsgemäße Messvorrichtung ist das Vorhandensein einer zeitlich schwankenden Helligkeitsvariation über die Oberfläche, wobei die Helligkeitsvariation örtlich schwanken kann, allerdings mit einer zeitlichen Variation der Helligkeit, die deutlich schneller ist als die Ausrichtungsveränderung der optischen Achse der Helligkeitssensoren zur Bestimmung eines korrelierten Messpunktes.

Die Messvorrichtung besitzt einen spektralen Messbereich, der auf das jeweilige Messobjekt angepasst ist. Dieser spektrale Messbereich kann im infraroten, sichtbaren, ultravioletten oder in einem anderen geeigneten Spektralbereich liegen. Die Messvorrichtung kann dabei Licht in einem schmalen oder breiteren Wellenlängenbereich messen. Hierbei müssen die jeweils verwendeten Helligkeitssensoren auf den spektralen Messbereich angepasst sein. Der Fachmann ist in der Lage, für den jeweilig anzuwendenden spektralen Messbereich die entsprechend geeigneten Helligkeitssensoren auszuwählen.

Für die nachfolgende trigonometrische Auswertung müssen die zwei räumlich separat angeordneten optischen Helligkeitssensoren in einer vorbestimmten und damit bekannten Entfernung zueinander angeordnet sein. Diese Anordnung kann jede geeignete Anordnung zueinander sein. Die gedachte Linie entlang der Abstands zwischen den Helligkeitssensoren braucht dabei nicht parallel zur Oberfläche des Messobjektes ausgerichtet sein, sondern kann auch schief im Raum stehen, sofern nur die genauen Positionen der Helligkeitssensoren im Raum bekannt sind. Allerdings ist eine ungefähre parallele Ausrichtung der gedachten Linie zur Oberfläche des Messobjektes vorteilhaft für die Handhabbarkeit der Messvorrichtung und den Bereich, der von beiden Helligkeitssensoren auf der Oberfläche des Messobjekts erkannt werden kann. Für eine gute Messgenauigkeit ist eine größere Entfernung zwischen den Helligkeitssensoren vorteilhaft, da die Blickrichtung des jeweiligen Helligkeitssensors auf denselben Messpunkt (korrelierter Messpunkt) für beide Helligkeitssensoren sehr unterschiedlich ist und daher Staubpartikel im Raum zwischen Messvorrichtung und Oberfläche des Messobjektes weniger oder keinen Einfluss auf den gemessenen Abstand haben als bei einer geringeren Entfernung der Helligkeitssensoren zueinander und die damit verbundene ähnlichere Blickrichtung der Helligkeitssensoren auf den korrelierten Messpunkt.

Die lokale Detektion der zeitlich schwankenden Helligkeitsverteilung der Oberfläche bezieht sich auf den Bereich, der mit dem Helligkeitssensor durch die entsprechende Optik der Messvorrichtung auf der Oberfläche des Messobjektes sichtbar ist. Hierbei kann eine telezentrische Optik der Messvorrichtung vorteilhaft sein, da bei dieser nur die Lichtstrahlen durch die Optik zum Helligkeitssensor gelangen, die von der Oberfläche als paralleles Bündel in Richtung der Messvorrichtung emittiert werden. Somit ist der vom Helligkeitssensor auf der Oberfläche des Messobjekts gemessene Bereich zumindest nahezu frei von Verzerrungen und unabhängig vom Abstand zur Messeinrichtung.

Das Ändern der Ausrichtung der Helligkeitssensoren (Ausrichtungsveränderung) kann mit jeder dafür geeigneten Aufhängung und jedem dafür geeigneten Bewegungsablauf durchgeführt werden, beispielsweise über Achse, Schienen, frei bewegliche Aufhängungen oder andere Bewegungsmimiken. Bei der Ausrichtungsveränderung muss dabei der Effekt auf die sich möglicherweise mit der Ausrichtungsveränderung ebenfalls ändernde Entfernung zwischen den Helligkeitssensoren bei der trigonometrischen Auswertung berücksichtigt werden. Vorzugsweise sind die Helligkeitssensoren um eine Achse herum verschwenkbar angeordnet, da dabei bei der Ausrichtungsveränderung die Entfernung der Helligkeitssensoren zueinander konstant bleibt (konstanter Achsenabstand trotz Drehung um die Achsen). Im Falle einer Verschwenkung eines der Helligkeitssensoren besitzt jeder der durch den verschwenkten Helligkeitssensor aufgenommene lokale Messpunkt aufgrund einer Messpunkt-abhängigen räumlichen ersten Ausrichtung des ersten Helligkeitssensors eine andere Entfernung zwischen der Oberfläche und dem verschwenkten Helligkeitssensor.

Als eine Reihe an lokalen Messpunkten unterschiedlicher zeitlich schwankender Helligkeitsverteilung werden die Messpunkte bezeichnet, für die die Helligkeitsverteilung mit der Ausrichtungsveränderung des Helligkeitssensors bestimmt wurden. Hierbei werden erste Reihen an Messpunkten von dem ersten Helligkeitssensor und zweite Reihen an Messpunkten von dem zweiten Helligkeitssensor gemessen. Ein Messpunkt ist hier nicht im mathematischen Sinne als Punkt, sondern als Bereich mit einer gewissen lateralen Ausdehnung auf der Oberfläche des Messobjektes zu verstehen, wobei die laterale Ausdehnung des Messpunktes als Messbereich von den Gegebenheiten der optischen Strahlführung in der Messvorrichtung abhängt, die das von der Oberfläche des Messobjektes ausgehende Licht in Richtung der Helligkeitssensoren innerhalb der Messvorrichtung lenkt. Somit kann der Begriff "Messpunkt" auch als "Messbereich" bezeichnet werden.

Ein korrelierter Messpunkt bezeichnet dabei den Ort auf der Oberfläche des Messobjektes, für den beide Helligkeitssensoren die zeitlich schwankende Helligkeitsverteilung als einen jeweiligen Messpunkt aufgenommen haben und sich die Helligkeitsverteilungen als Funktion der Zeit dabei so entsprechen, dass die Messpunkte vom gleichen Messort auf der Oberfläche des Messobjektes aufgenommen sein müssen. Hierbei müssen die zeitlich schwankenden Helligkeitsverteilungen der beiden Messpunkte, also das Messsignal der Intensität über die Zeit, nicht identisch zueinander sein. Als korrelierter Messpunkt werden auch die beiden Messpunkte (ein Messpunkt des ersten Helligkeitssensors und ein Messpunkt des zweiten Helligkeitssensors) bezeichnet, für die ein Maximum an Korrelation bei den verglichenen zeitlich schwankenden Helligkeitsverteilungen für alle möglichen Messpunktkombinationen der Messpunkte vom ersten und zweiten Helligkeitssensor vorliegt. Der Grad K der Korrelation zwischen zwei Messpunkten (also zwischen zwei Helligkeitsverteilungen in jeweiligen ein- oder zweidimensionalen Aufnahmen vom Messort aus unterschiedlichen Richtungen) wird mit einem üblichen Korrelator bestimmt:

$$K(\tau) = \int_{T1}^{T2} S1(t) * S2(t + \tau) \, dt$$

wobei S1 und S2 die Signale der Helligkeitssensoren als Funktion der Zeit für die beiden zu vergleichenden Messpunkte des ersten und zweiten Helligkeitssensors darstellen, wobei S1 zu einem Zeitpunkt t1 = t und S2 zu einem Zeitpunkt t2 = t + T gemessen wurde. Die Messvorrichtung und das damit durchgeführte Messverfahren beruhen darauf, dass bei einem festen Abstand zwischen den Helligkeitssensoren eine maximale Korrelation der Messpunkte mit jeweilig unterschiedlichen Ausrichtungen der Helligkeitssensoren zu den Messpunkten mit maximaler Korrelation festgestellt wird. Damit unterscheidet sich die vorliegende Erfindung grundsätzlich von einem Verfahren, bei dem die Helligkeitssensoren bei einer festen räumlichen Ausrichtung zum Messobjekt, bei der die Messwerte der beiden Helligkeitssensoren anfänglich korrelieren, bei dieser konstanten Ausrichtung auf das Messobjekt solange voneinander entfernt werden, bis keine Korrelation zwischen den Messpunkten mehr vorliegt.

Die Entfernung der Messvorrichtung zu diesem Ort und damit zum Messobjekt aus den sich für die jeweiligen Ausrichtungen ergebenden Winkeln der beiden Helligkeitssensoren zu dem korrelierten Messpunkt und der vorbestimmten Entfernung der Helligkeitssensoren zueinander wird trigonometrisch mittels einer Auswerteeinheit bestimmt. Mit der Trigonometrie lassen sich aus Größen eines gegebenen Dreiecks (Seitenlängen, Winkelgrößen, Längen von Dreieckstransversalen usw.) andere Größen dieses Dreiecks berechnen. Der Abstand zwischen Messvorrichtung und Messobjekt lässt sich beispielsweise wie folgt bestimmen:

$$DM = DS / (\tan \alpha1 + \tan \alpha2)$$

wobei DM der Abstand der Messvorrichtung zur Oberfläche des Messobjekts, DS die Entfernung der Helligkeitssensoren zueinander bei einer parallelen Ausrichtung der gedachten Linie zwischen den Helligkeitssensoren zur Oberfläche des Messobjektes und $\alpha1$ beziehungsweise $\alpha2$ die Winkel zwischen der Flächennormalen auf der Oberfläche des Messobjektes und der optischen Mittelachse zwischen Messpunkt und dem ersten beziehungsweise zweiten Helligkeitssensor sind, wobei der korrelierte Messpunkt zwischen der Projektion der Helligkeitssensoren auf die Oberfläche des Messobjektes liegt.

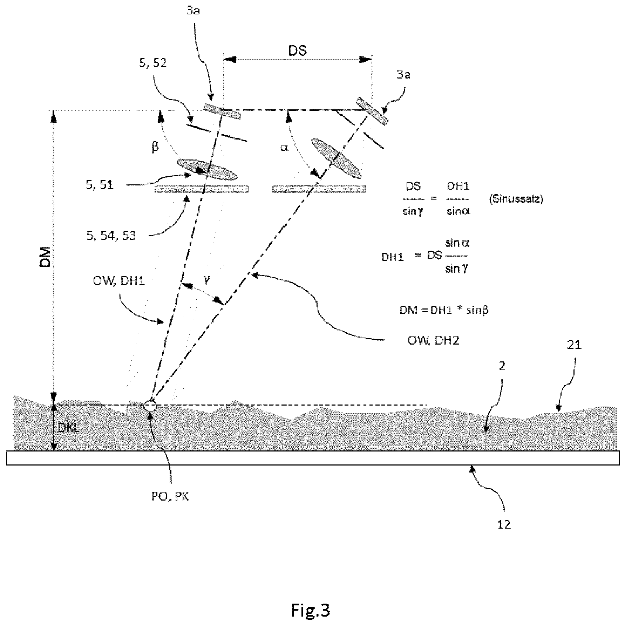

Allgemein ergibt sich der Abstand der Messvorrichtung zur Oberfläche des Messobjektes gedacht als senkrechter Abstand von der Verbindungslinie zwischen den Helligkeitssensoren bzw. ihrer Verlängerung zur Oberfläche des Messobjektes, mittels des Sinussatzes, siehe dazu auch Fig. 3.

Die Dicke des Messobjektes kann daraus bestimmt werden, wenn das Messobjekt auf einer Auflage aufliegt und die Entfernung der Messvorrichtung zu dieser Auflage ebenso vorbestimmt ist. Dann ergibt sich die Dicke des Messobjekts aus der Differenz zwischen Abstand der Messvorrichtung zur Auflage und zur Oberfläche des Messobjektes.

Mit der erfindungsgemäßen Messvorrichtung kann ein Abstand zwischen der Messvorrichtung und der Oberfläche eines Messobjektes genau bestimmt werden. Wenn dieser Abstand bekannt ist, kann beispielsweise auch wie voranstehend beschrieben die Dicke des Messobjektes bestimmt werden. Damit kann beispielsweise auch die Menge an Brenngut auf einer Brenngutauflage bestimmt werden. Die Messvorrichtung und ein entsprechendes Messverfahren sind aber nicht auf Brenngüter beschränkt. Grundsätzlich kann für jedes Messobjekt dessen Entfernung zu der Messvorrichtung bestimmt und zur Bestimmung weiterer Größen wie beispielsweise der Dicke des Messobjektes weiterverwandt werden, sofern das Messobjekt in irgendeiner Form eine zeitlich schwankende Helligkeitsverteilung auf der Oberfläche aufweist, sei es durch eigene Lichtemission oder durch Anstrahlen mit externem Licht.

In einer Ausführungsform sind beide Helligkeitssensoren ausrichtungsveränderlich, vorzugsweise verschwenkbar, angeordnet, damit auch der zweite Helligkeitssensor eine zweite Reihe an lokalen Messpunkten bestimmen kann, wobei zumindest durch die Ausrichtungsveränderung, vorzugsweise Verschwenkung, des zweiten Helligkeitssensors die zweite Reihe an Messpunkten so gestaltet ist, dass zumindest einer dieser lokalen Messpunkte an einem Ort auf der Oberfläche liegt, für den auch der erste Helligkeitssensor in einer bestimmten ersten Ausrichtung einen lokalen Messpunkt aufgenommen hat. Durch die Möglichkeit, beide Helligkeitssensoren in ihrer Ausrichtung zu verändern, können korrelierte Messpunkte über die gesamte Oberfläche des Messobjektes (zumindest entlang eine Linie) bestimmt werden, sodass das Höhenprofil des Messobjektes zumindest entlang einer Linie über die Oberfläche und nicht nur an einem einzelnen Punkt der Oberfläche bestimmt werden kann. Das ist vorteilhaft, falls die Dicke des Messobjektes zumindest entlang einer Raumrichtung variiert. In einer bevorzugten Ausführungsform bilden daher zumindest mehrere, vorzugsweise alle, Messpunkte der ersten Reihen an Messpunkten mit zumindest mehreren, vorzugsweise allen, Messpunkten der zweiten Reihe an Messpunkten paarweise korrelierte Messpunkte.

In einer weiteren Ausführungsform ist die Ausrichtungsveränderung eine Verschwenkung und der oder die Helligkeitssensoren werden für die Bestimmung der Messpunkte jeweils um einen gleichen Winkelbetrag verschwenkt werden, vorzugsweise dabei jeweils um eine zur Oberfläche des Messobjektes parallele Verschwenkachse. Damit kann erreicht werden, dass zu jedem Messpunkt der ersten Reihe sich ein Messpunkt der zweiten Reihe der beiden Helligkeitssensoren auf den gleichen Messort bezieht und daher für jeden Messort korrelierte Messpunkte vorliegen. Damit kann der Abstand zur Messvorrichtung zu jedem Messpunkt bestimmt werden. Für den Fall von Brenngut als das Messobjekt auf einer Brenngutauflage wäre die Ausrichtung der Achsen der Helligkeitssensoren beispielsweise horizontal.

In einer weiteren Ausführungsform werden daher die Helligkeitssensoren so ausrichtungsverändert, vorzugsweise verschwenkt, dass die Reihe an Messpunkten für beide Helligkeitssensoren zumindest in einer Richtung die gesamte Oberfläche des Messobjektes überstreichen.

In einer weiteren Ausführungsform ist die Messvorrichtung entlang der Oberfläche des Messobjekts verfahrbar angeordnet, vorzugsweise in zwei orthogonal zueinanderstehenden Richtungen. Somit kann für einen weiten Bereich der Oberfläche des Messobjektes deren Abstand zur Messvorrichtung bestimmt werden. Dadurch brauchen die Helligkeitssensoren nicht so ausrichtungsveränderbar aufgehängt sein, dass sie von einem einzigen Ort, an dem die Messvorrichtung positioniert ist, die gesamte Oberfläche durch die Ausrichtungsveränderungen überstreichen können müssen, was die Aufhängung der Helligkeitssensoren vereinfachen kann.

In einer weiteren Ausführungsform umfasst die Messvorrichtung zusätzlich einen dritten Helligkeitssensor, wobei die Helligkeitssensoren so verschwenkt werden können, dass die Oberfläche des Messobjekts in allen Richtungen überstrichen werden kann. Durch mehrfache Anwendung trigonometrischer Methoden, z.B. des Sinussatzes zwischen jeweils zwei der drei Helligkeitssensoren kann eine Oberfläche in alle Richtungen vermessen werden, ohne die Messvorrichtung verfahren zu müssen.

In einer Ausführungsform sind in der Messvorrichtung im optischen Weg von der Oberfläche des Messobjektes zum jeweiligen Helligkeitssensor ein oder mehrere optische Elemente aus der Gruppe Linse, Apertur-Blende, Filter oder Schutzscheibe angeordnet, wobei zumindest einige der optischen Elemente mit dem Helligkeitssensor so verbunden sind, dass diese mit dem Helligkeitssensor ausrichtungsveränderlich, vorzugsweise verschwenkbar, sind. Durch diese optischen Elemente kann die Strahlführung in der Messvorrichtung verbessert und daher das auszuwertende Signal der Helligkeitssensoren optimiert werden, was eine genauere Bestimmung des Abstands der Messvorrichtung zum Messobjekt ermöglicht. Mit der Schutzscheibe können die Helligkeitssensoren vor Verschmutzungen und andere Einflüsse der Messumgebung geschützt werden. Ein Filter kann für eine genaue Messung bestimmte Spektralbereiche herausfiltern, damit das restliche zum Helligkeitssensor durchdringende Spektrum genauer gemessen werden kann.

In einer weiteren Ausführungsform ist die Schutzscheibe eine Saphirscheibe. Saphir besitzt hervorragende Eigenschaften wie beispielsweise eine exzellente Transmission (durchlässig im breiten Spektrum - von UV bis IR), ist inert und bestens beständig gegen aggressive Medien, besitzt eine hervorragende Wärmeleitfähigkeit zur Ableitung von Umgebungswärme zur Schonung der Messvorrichtung, besitzt zudem eine ebenfalls hervorragende Wärmebeständigkeit und Beständigkeit gegenüber thermischen Schocks, was gerade für heiße Umgebungen vorteilhaft ist, hat eine brillante Kratz- und Abriebfestigkeit für beispielsweise staubige strömende Medien oberhalb des Messobjektes, besitzt beste Korrosions- und Abrasionsbeständigkeiten und eine extreme Härte (nach dem Diamanten das härteste Material) sowie beste elektrische Eigenschaften (hoher elektrischer Widerstand und eine große Dielektrizitätskonstante).

In einer weiteren Ausführungsform ist die Messvorrichtung dazu ausgestaltet, ein Abschirmgaspolster vor der Schutzscheibe zur Abschirmung der Schutzscheibe vor einer Umgebungsluft zwischen Messobjekt und Messvorrichtung zu erzeugen, vorzugsweise mittels einer oder mehrerer Düsen, die einen Überdruck an Abschirmgas als Abschirmpolster vor der Schutzscheibe erzeugen. Damit kann die Messvorrichtung in Umgebungsbedingungen eingesetzt werden, für die sie ohne diese Maßnahmen nicht geeignet oder in denen die Zuverlässigkeit der Messvorrichtung über die Betriebsdauer abnehmen würde.

In einer weiteren Ausführungsform sind die Helligkeitssensoren Infrarot-Detektoren. Dies bietet sich unter anderem für die Untersuchung von glühenden oder geschmolzenen Oberflächen an. Grundsätzlich können die Helligkeitssensoren auch andere Sensoren-Typen für andere Wellenlängenbereiche sein, sofern die Anwendung der Messvorrichtung dies erfordert.

In einer weiteren Ausführungsform wird für die Korrelationsberechnung nur der Signalanteil der Helligkeitssensoren von der Auswerteeinheit berücksichtigt, bei dem ein Einfluss durch die Ausrichtungsveränderung, vorzugsweise Verschwenkung, der Helligkeitssensoren vernachlässigbar ist. Damit wird die Messgenauigkeit und Zuverlässigkeit weiter erhöht.

In einer weiteren Ausführungsform wird für die Korrelationsberechnung nur ein Frequenzbereich der zeitlich schwankenden Helligkeitsverteilung berücksichtigt, der mindestens um einen Faktor 10 höher liegt als Helligkeitsschwankungen, die durch die Ausrichtungsänderung der Helligkeitssensoren verursacht werden. Die Helligkeitsschwankungen können je nach Messobjekt im Messsignal vom Hz-Bereich bis in den kHz-Bereich oder mehr variieren. Dabei werden die zeitlichen Helligkeitsschwankungen im Messsignal sowohl durch das Messobjekt selbst (zeitliche Helligkeitsschwankungen an einem festen Ort) als auch durch die Bewegung der optischen Achse der Helligkeitssensoren über die Oberfläche des Messobjekts bestimmt. Die Helligkeitsschwankungen aufgrund der Bewegung der optischen Achse der Helligkeitssensoren über die Oberfläche aufgrund der Ausrichtungsänderungen, z.B. Verschwenkung, der Helligkeitssensoren korreliert mit der Geschwindigkeit der optischen Achse über die Oberfläche und liegt daher beispielsweise im niedrigen Hz-Bereich. Sofern dieser Frequenzbereich im Messsignal für die Bestimmung des korrelierten Messpunktes nicht berücksichtig wird, werden nur die reinen zeitlichen Helligkeitsschwankungen eines bestimmten Ortes in der Korrelationsberechnung berücksichtigt, sodass das Ergebnis der Korrelationsberechnung zur Bestimmung des korrelierten Messpunktes zuverlässiger ist. Hierbei ist noch einmal deutlich anzumerken, dass bei der erfinderischen Vorrichtung und dem erfinderischen Verfahren für die Korrelationsberechnung die zeitlich schwankende Helligkeitsverteilung als Funktion der Zeit für die jeweiligen Messpunkte miteinander verglichen werden, nicht zweidimensionale Helligkeitsbilder, die für einen bestimmten singulären Zeitpunkt aufgenommen werden. Die tatsächlich für die Korrelationsberechnung verwendeten und nicht betrachteten Frequenzbereiche im Messsignal hängen von der Geschwindigkeit ab.

In einer weiteren Ausführungsform ist das Messobjekt zur Bereitstellung der zeitlich schwankenden Helligkeitsverteilung selbstleuchtend oder die Messvorrichtung umfasst im Falle eines nicht-selbstleuchtenden Messobjekts eine Lichtquelle zur Beleuchtung des Messobjekts mit geeignetem Licht, sodass das Messobjekt die Helligkeitsverteilung mittels Reflexion, Fluoreszenz, Phosphoreszenz oder Transmission des Lichts an der der Messvorrichtung zugewandten Oberfläche bereitstellt.

Die Erfindung betrifft des Weiteren ein Messsystem mit zumindest einer erfindungsgemäßen Messvorrichtung und einem Messobjekt, wobei ein Abstand der Messvorrichtung zu einer Auflage des Messobjekts vorbestimmt ist, und wobei mittels eines mit der Messvorrichtung bestimmten Abstands der Messvorrichtung zu einer der Messvorrichtung zugewandten Oberfläche eines Messobjektes und dem vorbestimmten Abstand eine Dicke des Messobjekts bestimmt werden kann. Die Auflage kann vom Fachmann beliebig ausgeführt sein und an das jeweilige Messobjekt gemäß seinen Dimensionen und Eigenschaften angepasst sein. Das Messsystem kann dabei auch mehrere (zwei, drei, vier oder mehr) Messvorrichtungen umfassen, die die Entfernung zum Messobjekt an verschiedenen Orten simultan und unabhängig voneinander messen können.

Somit können mit dem erfindungsgemäßen Messsystem dieselben Daten bzw. Abstände gemessen werden, wie mit der Messvorrichtung.

In einer Ausführungsform ist die Messeinrichtung dabei in einem Abstand zum Messobjekt angeordnet und deren Helligkeitssensoren besitzen einen Abstand zueinander, welche so groß sind, dass z.B. fliegender Staub zwischen Messobjekt und Messvorrichtung jeweils nur eine Helligkeitsverteilung für einen der beiden Helligkeitssensoren beeinflusst, bzw. die Helligkeitsverteilung der beiden Sensoren in unterschiedlicher, nichtkorrelierter Weise beeinflusst. Dadurch werden die von Staub hervorgerufenen Intensitätsschwankungen in der Korrelationsberechnung nicht berücksichtigt und der Abstand zum Messobjekt kann ohne Staubeinfluss genau bestimmt werden.

Die Erfindung betrifft des Weiteren eine Drehrohrofenanlage, zur Herstellung von Brenngut umfassend einen Drehrohrofen mit einem Ofeneingang zur Aufnahme von Vorprodukten des Brennguts und einem Ofenausgang zur Ausgabe von Brenngut als das Messobjekt sowie eine in Prozessrichtung hinter dem Ofenausgang angeordnete Brenngutauflage als Auflage für das Brenngut umfassend zumindest eine erfindungsgemäße Messvorrichtung oder zumindest ein erfindungsgemäßes Messsystem (mit zumindest einer solchen Messvorrichtung), wobei die Messvorrichtung dazu ausgestaltet und angeordnet ist, über eine Messung eines Abstands der Messvorrichtung zu einer Oberfläche des Brennguts als ein Messobjekt der Messvorrichtung auf der Brenngutauflage die Dicke des Brennguts auf der Brenngutauflage zumindest lokal zu bestimmen, wobei die Entfernung der Brenngutauflage zur Messvorrichtung vorbestimmt ist.

Die Drehrohrofenanlage kann dabei in unterschiedlichen Anwendungen eingesetzt werden, beispielsweise in der Stahlherstellung, der Zementherstellung, in der Herstellung von Materialien mit hoher Prozesstemperatur wie beispielsweise bei der Titanoxyd- oder Aluminiumoxydherstellung, Glas und andere. Je nach Anwendung können mit der Drehrohrofenanlage entsprechend unterschiedliche Brenngüter hergestellt werden, beispielsweise Stahllegierungen, Zementklinker, Titanoxyd, Aluminiumoxyd oder andere Materialien. Bei der Herstellung von Zementklinker ist die Drehrohrofenanlage beispielsweise eine Zementdrehrohrofenanlage.

Die Prozessrichtung bezeichnet die räumliche und zeitliche Abfolge von Prozessen von den Vorprodukten in Richtung des Endprodukts, beispielsweise für eine Zementdrehrohrofenanlage von dem Vorwärmer über den Kalzinator über den Drehrohrofen vom Ofeneingang hin zum Ofenausgang und vor dort entlang der Kühlstreckenauflage als Brenngutauflage des Rostkühlers hin zu der Stelle, wo der Zementklinker gesammelt wird. Von hier können in Prozessrichtung weitere Folgeprozesse mit entsprechenden Komponenten anschließen. Bei Anwendungen abseits der Zementherstellung verläuft die Prozessrichtung analog über die dann dort für die jeweilige Anwendung vorhandenen Prozessschritte und Prozesskomponenten.

Mit der vorliegenden Erfindung kann somit in einer Drehrohrofenanlage unter Anwendung der erfindungsgemäßen Messvorrichtung oder des erfindungsgemäßen Messverfahrens die Menge an Brenngut nach Ausgabe durch den Drehrohrofen genau bestimmt werden. Mit dieser Steuergröße kann dann wiederum Einfluss auf den Gesamtprozess der Drehrohrofenanlage zur Optimierung des Herstellungsprozesses Einfluss genommen werden, sei es beispielsweise bezüglich der Qualität des Brenngutes und/oder der pro Zeiteinheit ausgegebenen Produktionsmenge.

In einer Ausführungsform umfasst die Drehrohrofenanlage eine Steuereinrichtung zur Steuerung der Herstellung des Brennguts, wobei die Messvorrichtung dazu vorgesehen ist, die bestimmte Dicke (beziehungsweise Höhe) des Brennguts auf dem (Schub-) Rost als eine Steuergröße an die Steuereinrichtung zur Steuerung zu übermitteln. Das Brenngut wird auf dem Schubrost mittels von unten eingeblasener Umgebungsluft abgekühlt. Die dadurch erhitzte Luft wiederrum wird als bereits vorgewärmte "Sekundärluft" zum Brenner in den Ofen, bzw. als "Tertiärluft" zum Kalzinator vor dem Ofeneinlauf geleitet. Auf diese Weise wird Energie eingespart, da die jeweiligen Luftströme sonst zusätzlich aufgeheizt werden müssten. Eine Drehrohrofenanlage besitzt neben der Dicke (beziehungsweise Höhe) des Brenngutes noch weitere Steuergrößen, wie beispielsweise die Prozesstemperatur im Drehrohrofen, die Menge an Vorprodukten, die pro Zeiteinheit in den Ofeneingang des Drehrohrofens eingegeben werden, die Rotationsgeschwindigkeit des Drehrohrofens, die Zusammensetzung und Temperatur der Prozessgase, die zusammen mit den Vorprodukten in den Drehrohrofen eingeleitet werden und die Auswahl der Vorprodukte und deren vorangegangene Behandlung. Aus der Dicke (beziehungsweise Höhe) des Brenngutes auf der Brenngutauflage und der dazu korrelierenden Menge an Brenngut auf der Brenngutauflage bestimmt die Steuereinrichtung, ob die anderen Steuergrößen der Drehrohrofenanlage angepasst werden müssen, um beispielsweise die Menge an Brenngut auf der Brenngutauflage zu erhöhen oder zu verringern. Die Steuereinrichtung greift dazu beispielsweise auf entsprechende Steuertabellen zu, in denen hinterlegt ist, wie auf eine bestimmte Dicke des Brenngutes zu reagieren ist. Der Inhalt der Steuertabelle hängt von den Gegebenheiten der jeweiligen Drehrohrofenanlage und dem jeweiligen Anwendungsfeld ab. Bei Zementdrehrohrofenanlagen kann beispielsweise eine zu dicke Schicht an Zementklinker wegen des erhöhten Strömungswiderstands zu erhöhtem Energieverbrauch für die Kühlgebläse unter dem Rost führen oder zu verringerter Sekundär- bzw. Tertiärluft, was Einfluss auf die Klinkerqualität hat. Eine andere mögliche Folge ist, dass der Klinker zu heiß aus dem Rost austritt und nachfolgende Transportbänder zerstört. Kühlluftstrom, Rostvorschub, Rohmaterialaufgabe und Ofenrotation werden dann von der Steuer- und Regeleinrichtung entsprechend angepasst. Die Steuereinrichtung kann dabei als Computerprogramm ausgeführt auf einem Prozessor oder als entsprechendes Computersystem ausgeführt sein, das mit den einzelnen Komponenten der Drehrohrofenanlage datenverbunden ist. Diese Datenverbindung kann kabelbasiert und/oder drahtlos ausgeführt sein.

Die Erfindung betrifft des Weiteren ein Verfahren zur optischen Messung eines Abstands zwischen einer erfindungsgemäßen Messvorrichtung und einer der Messvorrichtung zugewandten Oberfläche eines Messobjektes mittels der Messvorrichtung, wobei die Oberfläche eine lokal und zeitlich schwankende Helligkeitsverteilung über die Oberfläche zumindest im spektralen Messbereich der Messvorrichtung besitzt, umfassend zumindest zwei räumlich separat angeordnete optische Helligkeitssensoren mit vorbestimmtem Abstand zueinander, die die Helligkeitsverteilung der Oberfläche im spektralen Messbereich lokal detektieren, umfassend nachfolgende Schritte:

- Vermessen der zeitlich schwankenden Helligkeitsverteilung der Oberfläche des Messobjektes an unterschiedlichen Orten auf der Oberfläche mittels Ausrichtungsveränderung, vorzugsweise Verschwenken, zumindest einem ersten der beiden Helligkeitssensoren, um eine Reihe an lokalen Messpunkten unterschiedlicher Helligkeitsverteilung zu bestimmen,

- Vermessen der zeitlich schwankenden Helligkeitsverteilung der Oberfläche des Messobjektes als lokaler Messpunkt an zumindest einem Ort der Oberfläche durch den zweiten Helligkeitssensor in einer bestimmten zweiten Ausrichtung, wobei zumindest durch die Ausrichtungsveränderung, vorzugsweise Verschwenkung, des ersten Helligkeitssensors die Reihe an Messpunkten des ersten Helligkeitssensors so gestaltet ist, dass zumindest einer dieser lokalen Messpunkte an einem Ort auf der Oberfläche liegt, an dem der lokale Messpunkt mit dem anderen Helligkeitssensor aufgenommen wurde, sodass diese beiden aufgenommenen lokalen Messpunkte einen gemeinsamen korrelierten Messpunkt für denselben Ort auf der Oberfläche darstellen,

- Bestimmen durch eine Auswerteeinheit, ob zwei lokale Messpunkte den korrelierten Messpunkt darstellen, indem die Auswerteinheit die zeitlich schwankenden Helligkeitsverteilungen der ersten und zweiten lokalen Messpunkte für die ersten und zweiten Helligkeitssensoren bei einer Korrelationsberechnung miteinander vergleicht und dieser Vergleich für den korrelierten Messpunkt ein Maximum an Korrelation bei den verglichenen zeitlich schwankenden Helligkeitsverteilungen ergibt, und

- Bestimmen des Abstands der Messvorrichtung zu diesem Ort und damit zum Messobjekt trigonometrisch mittels der Auswerteeinheit aus den sich für die jeweiligen Ausrichtungen ergebenden Winkeln der beiden Helligkeitssensoren zu dem korrelierten Messpunkt und der vorbestimmten Entfernung der Helligkeitssensoren zueinander,

- vorzugsweise mit dem zusätzlichen Schritt des Bestimmens einer Dicke des Messobjektes aus dem bestimmten Abstand der Messvorrichtung zum Messobjekt und einem vorbestimmten Abstand zwischen einer Auflage des Messobjekts und der Messvorrichtung.

Mit dem erfindungsgemäßen Verfahren kann ein Abstand zwischen der Messvorrichtung und der Oberfläche eines Messobjektes genau bestimmt werden. Wenn dieser Abstand bekannt ist, kann beispielsweise auch wie voranstehend beschrieben die Dicke des Messobjektes bestimmt werden. Damit kann beispielsweise auch die Menge an Brenngut auf einer Brenngutauflage bestimmt werden. Die Messvorrichtung und ein entsprechendes Messverfahren sind aber nicht auf Brenngüter beschränkt. Grundsätzlich kann für jedes Messobjekt dessen Entfernung zu der Messvorrichtung bestimmt und zur Bestimmung weiterer Größen wie beispielsweise der Dicke des Messobjektes weiterverwandt werden, sofern das Messobjekt in irgendeiner Form eine Helligkeitsverteilung auf der Oberfläche aufweist, sei es durch eigene Lichtemission oder durch Anstrahlen mit externem Licht.

Die Erfindung betrifft des Weiteren auch ein Verfahren zur Steuerung einer erfindungsgemäßen Drehrohrofenanlage umfassend alle Schritte des erfindungsgemäßen Verfahrens zur optischen Messung eines Abstands einer Messvorrichtung zu einer der Messvorrichtung zugewandten Oberfläche eines Messobjektes, wobei das Messobjekt ein Brenngut auf einer Brenngutauflage angeordnet in Prozessrichtung der Drehrohrofenanlage hinter einem Ofenausgang eines Drehrohrofens ist, umfassend den weiteren Schritt

- Bestimmen einer Dicke des Brennguts aus dem bestimmten Abstand der Messvorrichtung zu der der Messvorrichtung zugewandten Oberfläche des Brennguts und einem vorbestimmten Abstand der Brenngutauflage zur Messvorrichtung, und

- Übermitteln der Dicke des Brennguts als eine Steuergröße an eine Steuereinrichtung der Drehrohrofenanlage zur Steuerung der Drehrohrofenanlage, und

- Steuern der Drehrohrofenanlage unter Berücksichtigung der Dicke des Brennguts als eine der Steuergrößen.

Mit der vorliegenden Erfindung kann somit in einer Drehrohrofenanlage unter Anwendung des erfindungsgemäßen Messverfahrens die Menge an Brenngut nach Ausgabe durch den Drehrohrofen genau bestimmt werden kann. Mit dieser Steuergröße kann dann wiederum Einfluss auf den Gesamtprozess der Drehrohrofenanlage zur Optimierung des Herstellungsprozesses mittels der Steuereinrichtung Einfluss genommen werden, sei es beispielsweise bezüglich der Qualität des Brenngutes und/oder der pro Zeiteinheit ausgegebenen Produktionsmenge.

Die Drehrohrofenanlage kann dabei eine Zementdrehrohrofenanlage und das Brenngut ein Zementklinker sein.

Es versteht sich, dass Merkmale der vorstehend bzw. in den Ansprüchen beschriebenen Lösungen kombiniert werden können, auch abweichend von den Anspruchsrückbezügen, um die vorliegend erzielbaren Vorteile und Effekte entsprechend einzeln oder kumuliert umsetzen zu können.

**Kurze Beschreibung der Figuren**

Zusätzlich sind weitere Merkmale, Effekte und Vorteile vorliegender Erfindung anhand anliegender Zeichnung und nachfolgender Beschreibung erläutert. Komponenten, welche in den einzelnen Figuren wenigstens im Wesentlichen hinsichtlich ihrer Funktion übereinstimmen, sind hierbei mit gleichen Bezugzeichen gekennzeichnet, wobei die Komponenten nicht in allen Figuren beziffert und erläutert sein müssen.

Die Zeichnung zeigen:

Fig.1: schematische Darstellung einer Ausführungsform der erfindungsgemäßen Messvorrichtung bzw. Messsystem, mit vereinfachter Bestimmung des senkrechten Abstands für den Mittelpunkt zwischen den Sensoren;

Fig.2: eine schematische Darstellung der Reihen an Messpunkten auf der Oberfläche des Messobjektes gewonnen durch den ersten und zweiten Helligkeitssensor der erfindungsgemäßen Messvorrichtung;

Fig.3: schematische Darstellung einer Ausführungsform der erfindungsgemäßen Messvorrichtung bzw. Messsystem, zur Bestimmung des senkrechten Abstands an einem beliebigen Punkt der Verbindungslinie zwischen den Helligkeitssensoren oder ihrer Verlängerung;

Fig.4: schematische Darstellung einer Ausführungsform der erfindungsgemäßen Messvorrichtung bzw. Messsystem mit drei Helligkeitssensoren, zur Bestimmung des senkrechten Abstands an einem beliebigen Punkt der von den drei Helligkeitssensoren aufgespannten Fläche;

Fig.5: eine Ausführungsform einer erfindungsgemäßen Drehrohrofenanlage mit einer Steuereinrichtung unter Verwendung der erfindungsgemäßen Messvorrichtung; und

Fig.6: eine Ausführungsform der erfindungsgemäßen Verfahren zur optischen Messung eines Abstands zwischen einer erfindungsgemäßen Messvorrichtung und einer der Messvorrichtung zugewandten Oberfläche eines Messobjektes und zur Steuerung einer Drehrohrofenanlage basierend auf den voranstehend genannten Messdaten.

**Ausführungsbeispiele**

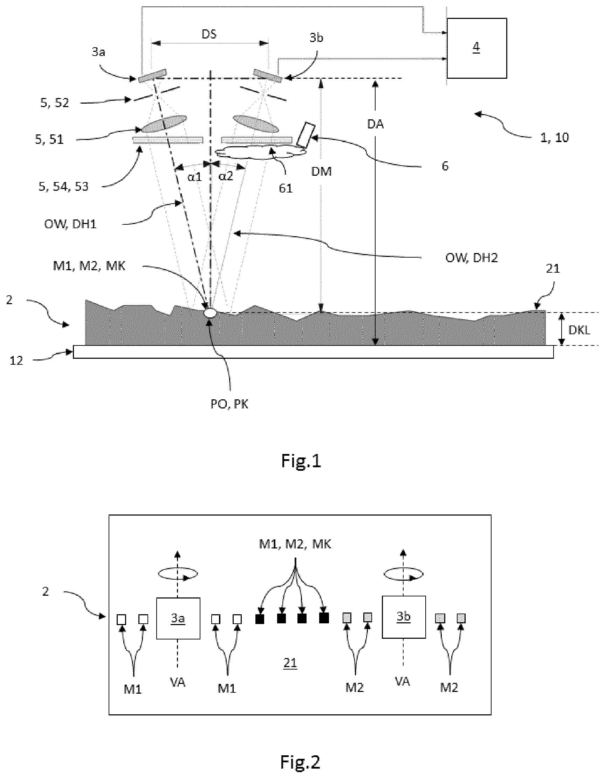

Fig.1 zeigt eine schematische Darstellung einer Ausführungsform der erfindungsgemäßen Messvorrichtung 1 bzw. Messsystem 10 mit zumindest einer erfindungsgemäßen Messvorrichtung 1. Die Messvorrichtung 1 zur optischen Messung eines Abstands DM der Messvorrichtung 1 zu einer der Messvorrichtung 1 zugewandten Oberfläche 21 eines Messobjektes 2, wobei die Oberfläche 21 eine örtlich und zeitlich schwankende Helligkeitsverteilung über die Oberfläche 21 zumindest im spektralen Messbereich der Messvorrichtung 1 besitzt, umfasst hier zwei räumlich separat angeordnete optische Helligkeitssensoren 3a, 3b mit vorbestimmtem Abstand DS zueinander. Der Abstand DS wird durch die Aufhängung der Helligkeitssensoren 3a, 3b bestimmt, die die zeitliche schwankende Helligkeitsverteilung der Oberfläche 21 im spektralen Messbereich lokal detektieren. Die Helligkeitssensoren 3a, 3b sind dabei so über dem Messobjekt 2 angeordnet, dass eine gedachte Linie entlang des Abstands DS parallel zur Oberfläche 21 des Messobjektes 2 liegt. Hier ist außerdem zumindest der erste Helligkeitssensor 3a verschwenkbar so angeordnet, dass er die zeitliche schwankende Helligkeitsverteilung der Oberfläche 21 des Messobjektes 1 an unterschiedlichen Orten PO auf der Oberfläche 21 vermisst, um eine erste Reihe an lokalen Messpunkten M1 unterschiedlicher Helligkeitsverteilung zu bestimmen, wobei zumindest durch die Verschwenkung des ersten Helligkeitssensors 3a die erste Reihe an lokalen Messpunkten M1 des ersten Helligkeitssensors 3a so gestaltet ist, dass zumindest einer dieser lokalen Messpunkte M1 an einem Ort PK auf der Oberfläche 21 liegt, für den auch der zweite Helligkeitssensor 3b in einer bestimmten zweiten Ausrichtung einen lokalen Messpunkt M2 aufgenommen hat, sodass diese beiden aufgenommenen lokalen Messpunkte M1, M2 einen gemeinsamen korrelierten Messpunkt KM für denselben Ort PK auf der Oberfläche 21 darstellen, wobei die Entfernung der Messvorrichtung 1 zu diesem Ort PK und damit zum Messobjekt 2 aus den sich für die jeweiligen Ausrichtungen ergebenden Winkeln $\alpha$1, $\alpha$2 der beiden Helligkeitssensoren 3a, 3b zu dem korrelierten Messpunkt MK und der vorbestimmten Entfernung DS der Helligkeitssensoren zueinander trigonometrisch mittels einer Auswerteeinheit 4 mittels DM = DS / (tan $\alpha$1 + tan $\alpha$2) bestimmt wird, wobei zwei lokale Messpunkte M1, M2 den korrelierten Messpunkt MK darstellen, bei denen die miteinander verglichenen Helligkeitsverteilungen für die ersten und zweiten Helligkeitssensoren 3a, 3b bei einer Korrelationsberechnung ein Maximum an Korrelation bei den verglichenen zeitlich schwankenden Helligkeitsverteilungen besitzen. Die Messvorrichtung 1 kann dabei entlang der Oberfläche 21 des Messobjekts 2 verfahrbar angeordnet sein, vorzugsweise in zwei orthogonal zueinanderstehenden Richtungen. In der Messvorrichtung 1 sind im optischen Weg OW von der Oberfläche 21 des Messobjektes 2 zum jeweiligen Helligkeitssensor 3a, 3b mehrere optische Elemente 5 umfassend Linsen 51, Apertur-Blenden 52, Filter 53 und Schutzscheiben 54 angeordnet, wobei die optischen Elemente 5 mit dem Helligkeitssensor 3a, 3b so verbunden sind, dass diese mit dem Helligkeitssensor 3a, 3b verschwenkbar sind. Die Schutzscheibe 54 ist hier eine Saphirscheibe. Die Messvorrichtung 1 ist ferner dazu ausgestaltet, ein Abschirmgaspolster 61 vor der Schutzscheibe 54 zur Abschirmung der Schutzscheibe 54 vor einer Umgebungsluft zwischen Messobjekt 2 und Messvorrichtung 1 zu erzeugen, hier mittels Düsen 6, die einen Überdruck an Abschirmgas als Abschirmpolster 61 vor der Schutzscheibe 54 erzeugen. Aus Gründen der Übersichtlichkeit ist das nur vor der einen Saphirscheibe 54 gezeigt. Ein entsprechendes Abschirmpolster 61 würde auch vor der anderen Schutzscheibe 54 erzeugt werden. Hierbei ist es unerheblich, ob die Schutzscheibe 54 aus Saphir oder aus einem anderen geeigneten Material gefertigt ist. In dieser Ausführungsform sind die die Helligkeitssensoren 3a, 3b Infrarot-Detektoren. Je nach Ausführungsform können die Helligkeitssensoren auch andere Detektoren-Typen sein. Bei der Korrelationsberechnung kann nur der Signalanteil der Helligkeitssensoren 3a, 3b von der Auswerteeinheit 4 berücksichtigt werden, bei dem ein Einfluss durch die Ausrichtungsveränderung, vorzugsweise Verschwenkung, der Helligkeitssensoren 3a, 3b vernachlässigbar ist. Hierbei kann das Messobjekt 2 zur Bereitstellung der Helligkeitsverteilung selbstleuchtend sein oder die Messvorrichtung 1 umfasst im Falle eines nicht-selbstleuchtenden Messobjekts 2 eine Lichtquelle zur Beleuchtung des Messobjekts mit geeignetem Licht, sodass das Messobjekt 2 die Helligkeitsverteilung vorzugsweise mittels Reflektion, Fluoreszenz, Phosphoreszenz oder Transmission des Lichts an der der Messvorrichtung 1 zugewandten Oberfläche 21 bereitstellt.

Ist die Messvorrichtung 1 ein Teil eines Messsystems 10 mit einem Messobjekt 2, so ist ein Abstand DA der Messvorrichtung 1 zu einer Auflage 12 des Messobjekts 2 vorbestimmt, wobei mittels eines mit der Messvorrichtung bestimmten Abstands DM und dem vorbestimmten Abstand DA eine Dicke DKL mittels DKL = DA - DM des Messobjekts 2 bestimmt werden kann. Hierbei kann die Messeinrichtung 1 in einem Abstand DM zum Messobjekt 2 angeordnet sein und deren Helligkeitssensoren 3a, 3b besitzen einen Abstand DS zueinander, wobei die Abstände DM, DS so groß sind, dass fliegender Staub zwischen Messobjekt 2 und Messvorrichtung 1 jeweils nur eine Helligkeitsverteilung für einen der beiden Helligkeitssensoren 3a, 3b beeinflusst.

Fig.2 zeigt eine schematische Darstellung der Reihen an Messpunkten M1, M2 auf der Oberfläche 21 des Messobjektes 1 gewonnen durch den ersten und zweiten Helligkeitssensor 3a, 3b der erfindungsgemäßen Messvorrichtung 1. Hier sind beide Helligkeitssensoren 3a, 3b verschwenkbar um eine Verschwenkachse VA angeordnet, damit neben dem ersten Helligkeitssensor 3a und dessen erster Reihe an lokalen Messpunkten M1 auch der zweite Helligkeitssensor 3b eine zweite Reihe an lokalen Messpunkten M2 bestimmen kann, wobei durch die Verschwenkung der ersten und zweiten Helligkeitssensoren 3a, 3b die zweite Reihe an Messpunkten M2 so gestaltet ist, dass zumindest einer dieser lokalen Messpunkte M2 an einem Ort PK auf der Oberfläche 21 liegt, für den auch der erste Helligkeitssensor 3a in einer bestimmten Ausrichtung einen lokalen Messpunkt M1 aufgenommen hat. Hierbei bilden zumindest mehrere, vorzugsweise alle, Messpunkte M1 der ersten Reihen an Messpunkten M1 mit zumindest mehreren, vorzugsweise allen, Messpunkten M2 der zweiten Reihe an Messpunkten M2 paarweise korrelierte Messpunkte MK (als gefüllte Quadrate dargestellt). Bei der Verschwenkung werden die Helligkeitssensoren 3a, 3b für die Bestimmung der Messpunkte M1, M2 jeweils um einen gleichen Winkelbetrag verschwenkt, hierbei jeweils um eine zur Oberfläche 21 des Messobjektes 2 parallele Verschwenkachse VA. Die Helligkeitssensoren 3a, 3b werden dabei so verschwenkt, dass die Reihe an Messpunkten M1, M2 für beide Helligkeitssensoren 3a, 3b zumindest in einer Richtung die gesamte Oberfläche 21 des Messobjektes 2 überstreichen.

Fig.3 zeigt eine schematische Darstellung einer Ausführungsform der erfindungsgemäßen Messvorrichtung 1 bzw. Messsystem 10 zur Bestimmung des senkrechten Abstands DM an einem beliebigen korrelierten Messpunkt KM zwischen der Messvorrichtung 1 und der der Messvorrichtung zugewandten Oberfläche 21 eines Messobjektes 2. Die Messvorrichtung 1 entspricht vom Grundsatz her der Messvorrichtung aus Fig.1, sodass für die Feststellung eines korrelierten Messpunkte KM das Voranstehende hier ebenso gilt. Die Entfernung der Messvorrichtung 1 zu diesem Messpunkt PK an einem beliebigen Ort PO auf der Oberfläche 21 und damit zum Messobjekt 2 ergibt sich hier ebenfalls aus den sich für die jeweiligen Ausrichtungen ergebenden Winkeln $\alpha$ und $\beta$ der beiden Helligkeitssensoren 3a, 3b zu dem korrelierten Messpunkt MK und dem sich daraus ergebenden Winkel $\gamma$ und der vorbestimmten Entfernung DS der Helligkeitssensoren zueinander trigonometrisch mittels einer Auswerteeinheit 4 mittels $DM = DH1 * \sin \beta$, wobei $DH1 = DS * (\sin \alpha / \sin \gamma)$ bestimmt wird. Ist die Messvorrichtung 1 auch hier ein Teil eines Messsystems 10 mit einem Messobjekt 2, so ist ein Abstand DA der Messvorrichtung 1 zu einer Auflage 12 des Messobjekts 2 vorbestimmt, wobei mittels eines mit der Messvorrichtung bestimmten Abstands DM und dem vorbestimmten Abstand DA eine Dicke DKL mittels DKL = DA - DM des Messobjekts 2 bestimmt werden kann.

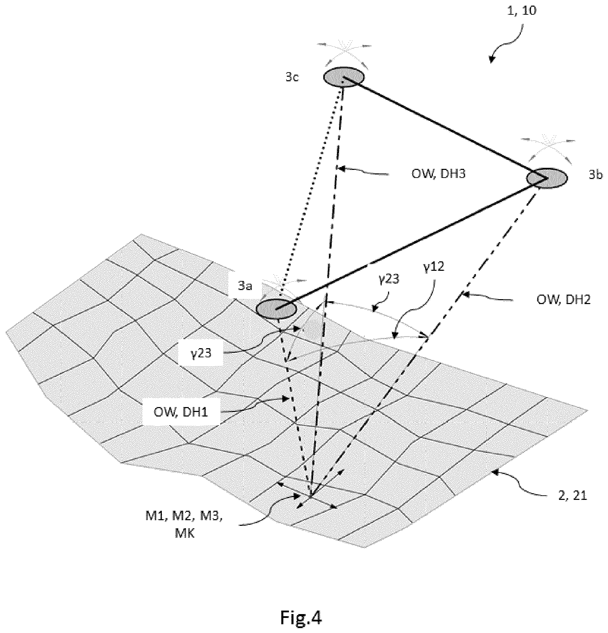

Fig.4 zeigt eine schematische Darstellung einer Ausführungsform der erfindungsgemäßen Messvorrichtung 1 bzw. Messsystem 10 mit drei Helligkeitssensoren zur Bestimmung des senkrechten Abstands DM an einem beliebigen korrelierten Messpunkt KM zwischen der Messvorrichtung 1 und der der Messvorrichtung zugewandten Oberfläche 21 eines Messobjektes 2 auf der von den drei Helligkeitssensoren aufgespannten Fläche. Hierbei können die Helligkeitssensoren 3a, 3b, 3c so verschwenkt werden, dass die gesamte Oberfläche 21 des Messobjekts 2 in allen Richtungen überstrichen werden kann, sodass die Helligkeitssensoren 3a, 3b und 3c in Abhängigkeit von ihrer Position und Ausrichtung entlang des optischen Weges OW einen Abstand DH1, DH2, DH3 zur Oberfläche 21 besitzen. Die Auswertung und Bestimmung des Abstandes DM erfolgt erneut trigonometrisch unter Verwendung der Ausrichtungswinkel $\gamma12$, $\gamma13$, $\gamma23$ zwischen jeweils zwei benachbarten Helligkeitssensoren 3a, 3b, 3c zueinander. Bezüglich der sonstigen Ausgestaltung der Messvorrichtung gilt analog das bereits zu Fig.1 Beschriebene.

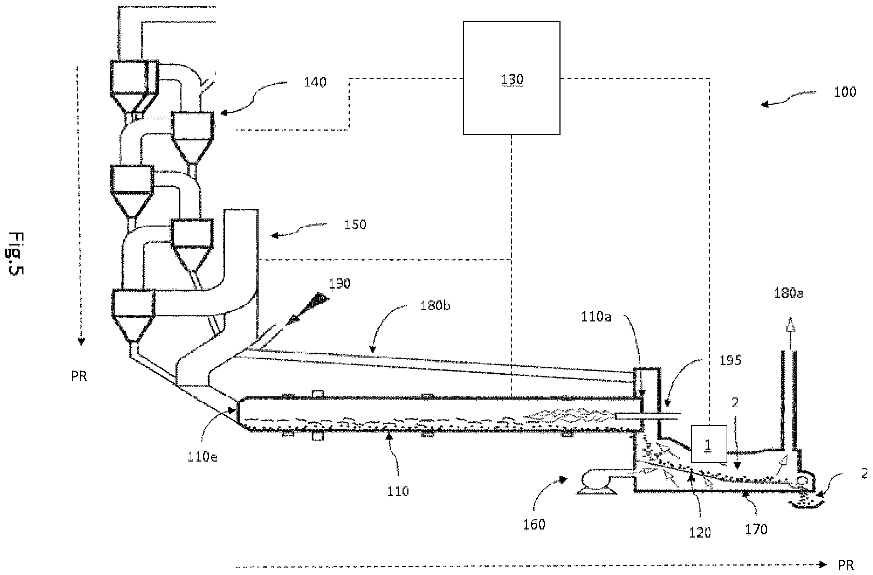

Fig.5 zeigt eine Ausführungsform einer erfindungsgemäßen Drehrohrofenanlage 100 mit einer Steuereinrichtung 130 unter Verwendung der erfindungsgemäßen Messvorrichtung 1. Die Drehrohrofenanlage 100, hier im Beispiel eine Zementdrehrohrofenanlage 100, zur Herstellung von Brenngut, hier im Beispiel Zementklinker, umfasst einen Drehrohrofen 110 mit einem Ofeneingang 110e zur Aufnahme von Vorprodukten des Brennguts und einem Ofenausgang 110a zur Ausgabe von Brenngut als das Messobjekt 2 sowie eine in Prozessrichtung PR hinter dem Ofenausgang 100a angeordnete Brenngutauflage 12, 120, hier eine Kühlstreckenauflage 12, als Auflage für den Zementklinker 2. Die Prozessrichtung PR verläuft hier über einen Vorwärmer 140, einen Kalzinator 150 zum Ofeneingang 110e, wo die Vorprodukte des Zementklinkers in den Drehrohrofen 110 eingegeben und dort mittels einer Feuerlanze 195 auf die notwendige Prozesstemperatur erwärmt werden. Mittels Tertiärluft 180b kann die heiße Luft des Drehrohrofens 110 energiesparend in dem Vorwärmer wiederverwendet werden. Zusätzlich kann Brennstoff 190 hinzugegeben werden. Über den Ofenausgang 110a fällt der glühende Zementklinker 2 auf die Kühlstreckenauflage 120 als Rostkühler 170, wo der Zementklinker für die Weiterverarbeitung per Luftströmung abgekühlt wird (siehe Kühlerabluft 180a). Oberhalb der Kühlstreckenauflage 120 ist in einem vorbestimmten Abstand DA zur Kühlstreckenauflage 120 eine erfindungsgemäße Messvorrichtung 1 (gegebenenfalls als Messsystem 10) angeordnet, die dazu ausgestaltet und angeordnet ist, über eine Messung eines Abstands DM der Messvorrichtung 1 zu einer Oberfläche 21 des Zementklinkers als das Messobjekt 2 die Dicke DKL des Brennguts 2 auf der Brenngutauflage 12, 120 zumindest lokal zu bestimmen, die sich aus der Differenz zwischen der Entfernung DA der Brenngutauflage 12, 120 zur Messvorrichtung 2 und dem bestimmten Abstand DM der Messvorrichtung 1 zur Oberfläche 21 des Zementklinkers 2 ergibt. Die Drehrohrofenanlage 100 umfasst des Weiteren eine Steuereinrichtung 130 zur Steuerung der Herstellung des Zementklinkers 2, wobei die Messvorrichtung 1 dazu vorgesehen ist, die bestimmte Dicke DKL des Brennguts 2 als eine Steuergröße an die Steuereinrichtung 1 zur Steuerung zu übermitteln. Eine Drehrohrofenanlage 100 besitzt neben der Dicke DKL des Zementklinkers 2 noch weitere Steuergrößen, wie beispielsweise die Prozesstemperatur im Drehrohrofen 110, die Menge an Vorprodukten, die pro Zeiteinheit in den Ofeneingang 110e des Drehrohrofens 110 eingegeben werden, die Rotationsgeschwindigkeit des Drehrohrofens 110, die Zusammensetzung und Temperatur der Prozessgase, die zusammen mit den Vorprodukten in den Drehrohrofen 110 eingeleitet werden und die Auswahl der Vorprodukte und deren vorangegangene Behandlung. Aus der Dicke DKL des Zementklinkers 2 auf der Kühlstreckenauflage 120 und der dazu korrelierenden Menge an Zementklinker 2 auf der Kühlstreckenauflage 120 bestimmt die Steuereinrichtung 130, ob die anderen Steuergrößen der Drehrohrofenanlage 100 angepasst werden müssen, um beispielsweise die Menge an Zementklinker 2 auf der Kühlstreckenauflage 120 zu erhöhen oder zu verringern. Die Steuereinrichtung 130 greift dazu beispielsweise auf entsprechende Steuertabellen zu, in denen hinterlegt ist, wie auf eine bestimmte Dicke DKL des Zementklinkers 2 zu reagieren ist. Der Inhalt der Steuertabelle hängt von den Gegebenheiten der jeweiligen Drehrohrofenanlage 100 und dem jeweiligen Anwendungsfeld ab.

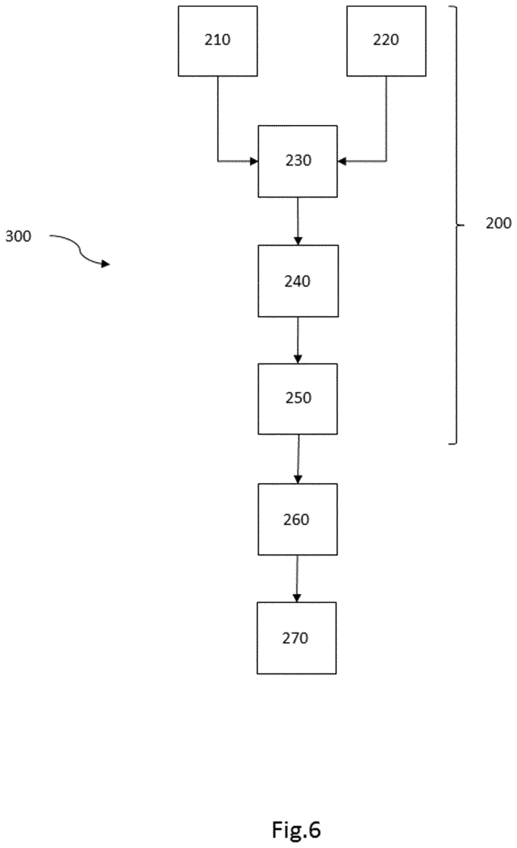

Fig.6 zeigt eine Ausführungsform der erfindungsgemäßen Verfahren 200, 300 zur optischen Messung eines Abstands DM zwischen einer erfindungsgemäßen Messvorrichtung 1 und einer der Messvorrichtung 1 zugewandten Oberfläche 21 eines Messobjektes 2 und zur Steuerung einer Drehrohrofenanlage 100 basierend auf den voranstehend genannten Messdaten, umfassend nachfolgende Schritte des Vermessens 210 der zeitlich schwankenden Helligkeitsverteilung der Oberfläche 21 des Messobjektes 1 an unterschiedlichen Orten PO auf der Oberfläche 21 mittels Ausrichtungsveränderung, vorzugsweise Verschwenken, zumindest eines ersten der beiden Helligkeitssensoren 3a, 3b, um eine Reihe an lokalen Messpunkten M1 unterschiedlicher Helligkeitsverteilung zu bestimmen, des Vermessens 220 der zeitlich schwankenden Helligkeitsverteilung der Oberfläche 21 des Messobjektes 2 als lokaler Messpunkt M2 an zumindest einem Ort der Oberfläche 21 durch den zweiten Helligkeitssensor 3b in einer bestimmten zweiten Ausrichtung, wobei zumindest durch die Ausrichtungsveränderung, vorzugsweise Verschwenkung, des ersten Helligkeitssensors 3a, 3b die Reihe an Messpunkten M1 des ersten Helligkeitssensors 3a so gestaltet ist, dass zumindest einer dieser lokalen Messpunkte M1 an einem Ort PK auf der Oberfläche 21 liegt, an dem der lokale Messpunkt M2 mit dem anderen Helligkeitssensor aufgenommen wurde, sodass diese beiden aufgenommenen lokalen Messpunkte M1, M2 einen gemeinsamen korrelierten Messpunkt KM für denselben Ort PK auf der Oberfläche 21 darstellen, des Bestimmens 230 durch eine Auswerteeinheit 4, ob zwei lokale Messpunkte M1, M2 den korrelierten Messpunkt MK darstellen, indem die Auswerteinheit die zeitlich schwankenden Helligkeitsverteilungen der ersten und zweiten lokalen Messpunkte M1, M2 für die ersten und zweiten Helligkeitssensoren 3a, 3b bei einer Korrelationsberechnung miteinander vergleicht und dieser Vergleich für den korrelierten Messpunkt ein Maximum an Korrelation bei den verglichenen zeitlich schwankenden Helligkeitsverteilungen ergibt, des Bestimmens 240 des Abstands DM der Messvorrichtung 1 zu diesem Ort PK und damit zum Messobjekt 2 trigonometrisch mittels der Auswerteeinheit 4 aus den sich für die jeweiligen Ausrichtungen ergebenden Winkeln $\alpha 1$, $\alpha 2$ der beiden Helligkeitssensoren 3a, 3b zu dem korrelierten Messpunkt MK und der vorbestimmten Entfernung DH der Helligkeitssensoren zueinander, und des Bestimmens 250 einer Dicke DKL des Messobjektes aus dem bestimmten Abstand DM der Messvorrichtung 1 zum Messobjekt 2 und einem vorbestimmten Abstand DA zwischen einer Auflage 12 des Messobjekts 2 und der Messvorrichtung 1. Das Verfahren 300 zur Steuerung einer erfindungsgemäßen Drehrohrofenanlage (100) umfassend alle bereits beschriebenen Schritte, wobei das Messobjekt 2 das Brenngut 2 ,die Dicke DKL des Messobjekts 2 die Dicke DKL des Brennguts 2 und die Auflage 12 die Brenngutauflage 12 ist, umfasst die weiteren Schritte des Übermittelns 260 der Dicke DKL des Brennguts 2 als eine Steuergröße an eine Steuereinrichtung 130 der Drehrohrofenanlage 100 zur Steuerung der Drehrohrofenanlage 100, und des Steuerns 270 der Drehrohrofenanlage 100 unter Berücksichtigung der Dicke des Brennguts 2 als eine der Steuergrößen.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um auch erläuterte Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses Ausführungsbeispiel.

**Liste der verwendeten Bezugszeichen**

| | |
|---|---|
| 1 | Messvorrichtung |
| 2 | Messobjekt, beispielsweise Brenngut |
| 21 | der Messvorrichtung zugewandt Oberfläche des Messobjektes |
| 3a | (erster) Helligkeitssensor |
| 3b | (zweiter) Helligkeitssensor |
| 3c | (dritter) Helligkeitssensor |
| 4 | Auswerteeinheit |
| 5 | optisches Element |
| 51 | Linse |
| 52 | Apertur-Blende |
| 53 | Filter |
| 54 | Schutzscheibe |
| 6 | Düse(n) |
| 61 | Abschirmgaspolster |
| 10 | Messsystem |
| 12 | Auflage des Messobjekts |
| 100 | Drehrohrofenanlage |
| 110 | Drehrohrofen |
| 110e | Ofeneingang |
| 110a | Ofenausgang |
| 120 | Brenngutauflage, beispielsweise eine Kühlstreckenauflage |
| 130 | Steuerungseinrichtung der Drehrohrofenanlage |
| 140 | Vorwärmer |
| 150 | Kalzinator |
| 160 | Kühlluft |
| 170 | Rostkühler |
| 180a | Kühlerabluft |
| 180b | Tertiärluftleitung |
| 190 | Brennstoff |
| 195 | Feuerlanze |

| | |
|---|---|
| 200 | Verfahren zur optischen Messung eines Abstands einer Messvorrichtung zu einem Messobjekt |
| 210, 220 | Vermessen der Helligkeitsverteilung der Oberfläche des Messobjektes an unterschiedlichen Orten auf der Oberfläche durch den ersten und zweiten Helligkeitssensor |
| 230 | Bestimmen durch eine Auswerteeinheit, ob zwei lokale Messpunkte den korrelierten Messpunkt darstellen |
| 240 | Bestimmen der Entfernung der Messvorrichtung zum Messobjekt trigonometrisch mittels der Auswerteeinheit |
| 250 | Bestimmen einer Dicke des Messobjektes bzw. des Brennguts |
| 260 | Übermitteln der Dicke des Brennguts als eine Steuergröße an eine Steuereinrichtung |
| 270 | Steuern der Drehrohrofenanlage |
| $\alpha$, $\alpha1$, $\alpha2$, $\beta$ | für die jeweiligen Ausrichtungen ergebenden Winkeln der beiden Helligkeitssensoren zu dem korrelierten Messpunkt |
| $\gamma12$, $\gamma13$, $\gamma23$ | für die jeweiligen Ausrichtungen ergebenden Winkeln bei drei Helligkeitssensoren in der Messvorrichtung |
| DH1 | Entfernung zwischen dem ersten Helligkeitssensor und dem Messpunkt des ersten Helligkeitssensors auf der Oberfläche 21 des Messobjektes |
| DH2 | Entfernung zwischen dem zweiten Helligkeitssensor und dem Messpunkt des zweiten Helligkeitssensors auf der Oberfläche 21 des Messobjektes |
| DA | Abstand zwischen einer Auflage des Messobjekts und der Messvorrichtung |
| DM | Abstand Messvorrichtung zur Oberfläche des Messobjektes |
| DS | vorbestimmter (konstanter) Abstand zwischen den beiden Helligkeitssensoren |
| DKL | Dicke des Messobjektes, beispielsweise ein Brenngut |
| M1 | Messpunkt des ersten Helligkeitssensors |
| M2 | Messpunkt des zweiten Helligkeitssensors |
| MK | korrelierter Messpunkt |
| OW | optischer Weg |
| PO | Ort auf der Oberfläche 21 des Messobjektes |
| PK | Ort der korrelierten Messpunkte auf der Oberfläche 21 |
| PR | Prozessrichtung der Drehrohrofenanlage |
| VA | Verschwenkachse zur Ausrichtungsveränderung bzw. Verschwenkung |

**Patentansprüche**

1. Eine Messvorrichtung (1) zur optischen Messung eines Abstands (DM) der Messvorrichtung (1) zu einer der Messvorrichtung (1) zugewandten Oberfläche (21) eines Messobjektes (2), wobei die Oberfläche (21) eine örtlich und zeitlich schwankende Helligkeitsverteilung über die Oberfläche (21) zumindest im spektralen Messbereich der Messvorrichtung (1) besitzt, umfassend zumindest zwei räumlich separat angeordnete optische Helligkeitssensoren (3a, 3b) mit vorbestimmtem Abstand (DS) zueinander, die die zeitliche schwankende Helligkeitsverteilung der Oberfläche (21) im spektralen Messbereich lokal detektieren, und zumindest einer der beiden Helligkeitssensoren (3a, 3b) ausrichtungsveränderlich, vorzugsweise verschwenkbar, so angeordnet ist, dass er die zeitliche schwankende Helligkeitsverteilung der Oberfläche (21) des Messobjektes (1) an unterschiedlichen Orten (PO) auf der Oberfläche (21) vermisst, um eine erste Reihe an lokalen Messpunkten (M1) unterschiedlicher Helligkeitsverteilung zu bestimmen, wobei zumindest durch die Ausrichtungsveränderung, vorzugsweise Verschwenkung, des ersten Helligkeitssensors (3a, 3b) die erste Reihe an lokalen Messpunkten (M1) des ersten Helligkeitssensors (3a) so gestaltet ist, dass zumindest einer dieser lokalen Messpunkte (M1) an einem Ort (PK) auf der Oberfläche (21) liegt, für den auch der zweite Helligkeitssensor (3b) in einer bestimmten zweiten Ausrichtung einen lokalen Messpunkt (M2) aufgenommen hat, sodass diese beiden aufgenommenen lokalen Messpunkte (M1, M2) einen gemeinsamen korrelierten Messpunkt (KM) für denselben Ort (PK) auf der Oberfläche (21) darstellen, wobei die Entfernung der Messvorrichtung (1) zu diesem Ort (PK) und damit zum Messobjekt (2) aus den sich für die jeweiligen Ausrichtungen ergebenden Winkeln ($\alpha1$, $\alpha2$) der beiden Helligkeitssensoren (3a, 3b) zu dem korrelierten Messpunkt (MK) und der vorbestimmten Entfernung (DH) der Helligkeitssensoren zueinander trigonometrisch mittels einer Auswerteeinheit (4) bestimmt wird, wobei zwei lokale Messpunkte (M1, M2) den korrelierten Messpunkt (MK) darstellen, bei denen die miteinander verglichenen Helligkeitsverteilungen für die ersten und zweiten Helligkeitssensoren (3a, 3b) bei einer Korrelationsberechnung ein Maximum an Korrelation bei den verglichenen zeitlich schwankenden Helligkeitsverteilungen besitzen.

2. Die Messvorrichtung (1) nach Anspruch 1, **dadurch gekennzeichnet,** **dass** beide Helligkeitssensoren (3a, 3b) ausrichtungsveränderlich, vorzugsweise verschwenkbar, angeordnet sind, damit auch der zweite Helligkeitssensor (3b) eine zweite Reihe an lokalen Messpunkten (M2) bestimmen kann, wobei zumindest durch die Ausrichtungsveränderung, vorzugsweise Verschwenkung, des zweiten Helligkeitssensors (3b) die zweite Reihe an Messpunkten (M2) so gestaltet ist, dass zumindest einer dieser lokalen Messpunkte (M2) an einem Ort (PK) auf der Oberfläche (21) liegt, für den auch der erste Helligkeitssensor (3a) in einer bestimmten ersten Ausrichtung einen lokalen Messpunkt (M1) aufgenommen hat.

3. Die Messvorrichtung (1) nach Anspruch 2, **dadurch gekennzeichnet,** **dass** zumindest mehrere, vorzugsweise alle, Messpunkte (M1) der ersten Reihen an Messpunkten (M1) mit zumindest mehreren, vorzugsweise allen, Messpunkten (M2) der zweiten Reihe an Messpunkten (M2) paarweise korrelierte Messpunkte (MK) bilden.

4. Die Messvorrichtung (1) nach einem der voranstehenden Ansprüche, **dadurch gekennzeichnet,** **dass** die Ausrichtungsveränderung eine Verschwenkung ist und der oder die Helligkeitssensoren (3a, 3b) für die Bestimmung der Messpunkte (M1, M2) jeweils um einen gleichen Winkelbetrag verschwenkt werden, vorzugsweise dabei jeweils um eine zur Oberfläche (21) des Messobjektes (2) parallele Verschwenkachse (VA).

5. Die Messvorrichtung (1) nach Anspruch 4, **dadurch gekennzeichnet,** **dass** die Helligkeitssensoren (3a, 3b) so ausrichtungsverändert, vorzugsweise verschwenkt, werden, dass die Reihe an Messpunkten (M1, M2) für beide Helligkeitssensoren (3a, 3b) zumindest in einer Richtung die gesamte Oberfläche (21) des Messobjektes (2) überstreichen.

6. Die Messvorrichtung (1) nach einem der voranstehenden Ansprüche, **dadurch gekennzeichnet,** **dass** die Messvorrichtung (1) entlang der Oberfläche (21) des Messobjekts (2) verfahrbar angeordnet ist, vorzugsweise in zwei orthogonal zueinanderstehenden Richtungen.

7. Die Messvorrichtung (1) nach einem der voranstehenden Ansprüche, **dadurch gekennzeichnet,** **dass** die Messvorrichtung (1) zusätzlich einen dritten Helligkeitssensor (3c) umfasst, wobei die Helligkeitssensoren (3a, 3b, 3c) so verschwenkt werden können, dass die Oberfläche (21) des Messobjekts (2) in allen Richtungen überstrichen werden kann.

8. Die Messvorrichtung (1) nach einem der voranstehenden Ansprüche, **dadurch gekennzeichnet,**

**dass** in der Messvorrichtung (1) im optischen Weg (OW) von der Oberfläche (21) des Messobjektes (2) zum jeweiligen Helligkeitssensor (3a, 3b) ein oder mehrere optische Elemente (5) aus der Gruppe Linse (51), Apertur-Blende (52), Filter (53) oder Schutzscheibe (54) angeordnet sind, wobei zumindest einige der optischen Elemente (5) mit dem Helligkeitssensor (3a, 3b) so verbunden sind, dass diese mit dem Helligkeitssensor (3a, 3b) ausrichtungsveränderlich, vorzugsweise verschwenkbar, sind, vorzugsweise ist die Schutzscheibe (54) eine Saphirscheibe.

9. Die Messvorrichtung (1) nach Anspruch 6 bis 8,
   **dadurch gekennzeichnet,**
   **dass** die Messvorrichtung (1) dazu ausgestaltet ist, ein Abschirmgaspolster (61) vor der Schutzscheibe (54) zur Abschirmung der Schutzscheibe (54) vor einer Umgebungsluft zwischen Messobjekt (2) und Messvorrichtung (1) zu erzeugen, vorzugsweise mittels ein oder mehrere Düsen (6), die einen Überdruck an Abschirmgas als Abschirmpolster (61) vor der Schutzscheibe (54) erzeugen.

10. Die Messvorrichtung (1) nach einem der voranstehenden Ansprüche,
    **dadurch gekennzeichnet,**
    **dass** für die Korrelationsberechnung nur der Signalanteil der Helligkeitssensoren (3a, 3b) von der Auswerteeinheit (4) berücksichtigt wird, bei dem ein Einfluss durch die Ausrichtungsveränderung, vorzugsweise Verschwenkung, der Helligkeitssensoren (3a, 3b) vernachlässigbar ist.

11. Die Messvorrichtung (1) nach Anspruch 10,
    **dadurch gekennzeichnet,**
    **dass** für die Korrelationsberechnung nur ein Frequenzbereich der zeitlich schwankenden Helligkeitsverteilung berücksichtigt wird, der mindestens um einen Faktor 10 höher liegt als Helligkeitsschwankungen, die durch die Ausrichtungsänderung der Helligkeitssensoren (3a, 3b) verursacht werden.

12. Die Messvorrichtung (1) nach einem der voranstehenden Ansprüche,
    **dadurch gekennzeichnet,**
    **dass** das Messobjekt (2) zur Bereitstellung der Helligkeitsverteilung selbstleuchtend ist oder die Messvorrichtung (1) im Falle eines nicht-selbstleuchtenden Messobjekts (2) eine Lichtquelle zur Beleuchtung des Messobjekts mit geeignetem Licht umfasst, sodass das Messobjekt (2) die Helligkeitsverteilung vorzugsweise mittels Reflektion, Fluoreszenz, Phosphoreszenz oder Transmission des Lichts an der der Messvorrichtung (1) zugewandten Oberfläche (21) bereitstellt.

13. Ein Messsystem (10) mit zumindest einer Messvorrichtung (1) nach einem der voranstehenden Ansprüche und einem Messobjekt (2), wobei ein Abstand (DA) der Messvorrichtung (1) zu einer Auflage (12) des Messobjekts (2) vorbestimmt ist, und wobei mittels eines mit der Messvorrichtung bestimmten Abstands (DM) der Messvorrichtung (1) zu einer der Messvorrichtung (1) zugewandten Oberfläche (21) eines Messobjektes (2) und dem vorbestimmten Abstand (DA) eine Dicke (DKL) des Messobjekts (2) bestimmt werden kann.

14. Das Messsystem (10) nach Anspruch 13,
    **dadurch gekennzeichnet,**
    **dass** die Messeinrichtung (1) in einem Abstand (DM) zum Messobjekt (2) angeordnet ist und deren Helligkeitssensoren (3a, 3b) einen Abstand (DS) zueinander besitzen, wobei die Abstände (DM, DS) so groß sind, dass fliegender Staub zwischen Messobjekt (2) und Messvorrichtung (1) jeweils nur eine Helligkeitsverteilung für einen der beiden Helligkeitssensoren (3a, 3b) beeinflusst.

15. Eine Drehrohrofenanlage (100), vorzugsweise eine Zementdrehrohrofenanlage, zur Herstellung von Brenngut, vorzugsweise Zementklinker, umfassend einen Drehrohrofen (110) mit einem Ofeneingang (110e) zur Aufnahme von Vorprodukten des Brennguts und einem Ofenausgang (110a) zur Ausgabe von Brenngut als das Messobjekt (2) sowie eine in Prozessrichtung (PR) hinter dem Ofenausgang (100a) angeordnete Brenngutauflage (12, 120), vorzugsweise eine Kühlstreckenauflage, als Auflage für das Brenngut (2), umfassend zumindest eine Messvorrichtung (1) nach einem der Ansprüche 1 bis 12 oder zumindest ein Messsystem (10) nach einem der Ansprüche 13 oder 14, wobei die Messvorrichtung (1) dazu ausgestaltet und angeordnet ist, über eine Messung eines Abstands (DM) der Messvorrichtung (1) zu einer Oberfläche (21) des Brennguts als ein Messobjekt (2) der Messvorrichtung (1) auf der Brenngutauflage (12, 120) die Dicke (DKL) des Brennguts (2) auf der Brenngutauflage (12, 120) zumindest lokal zu bestimmen, wobei die Entfernung (DA) der Brenngutauflage (12, 120) zur Messvorrichtung (2) vorbestimmt ist, vorzugsweise umfasst die Drehrohrofenanlage (100) eine Steuereinrichtung (130) zur Steuerung der Herstellung des Brennguts (2), wobei die Messvorrichtung (1) dazu vorgesehen ist, die bestimmte Dicke (DKL) des Brennguts (2) als eine Steuergröße an die Steuereinrichtung (1) zur Steuerung zu übermitteln.

16. Ein Verfahren (200) zur optischen Messung eines Abstands (DM) zwischen einer Messvorrichtung (1) nach einem der Ansprüche 1 bis 12 und einer der Messvorrichtung (1) zugewandten Oberfläche (21) eines Messobjektes (2) mittels der Messvorrichtung (1), wobei die Oberfläche (21) eine lokal und zeitlich schwankende Helligkeitsverteilung über die Oberfläche (21) zumindest im spektralen Messbereich der Messvorrichtung (1) besitzt, umfassend zumindest zwei räumlich separat angeordnete optische Helligkeitssensoren (3a, 3b) mit vorbestimmtem Abstand (DS) zueinander, die die Helligkeitsverteilung der Oberfläche (21) im spektralen Messbereich lokal detektieren, umfassend nachfolgende Schritte:

- Vermessen (210) der zeitlich schwankenden Helligkeitsverteilung der Oberfläche (21) des Messobjektes (1) an unterschiedlichen Orten (PO) auf der Oberfläche (21) mittels Ausrichtungsveränderung, vorzugsweise Verschwenken, zumindest eines ersten der beiden Helligkeitssensoren (3a, 3b), um eine Reihe an lokalen Messpunkten (M1) unterschiedlicher Helligkeitsverteilung zu bestimmen,

- Vermessen (220) der zeitlich schwankenden Helligkeitsverteilung der Oberfläche (21) des Messobjektes (2) als lokaler Messpunkt (M2) an zumindest einem Ort der Oberfläche (21) durch den zweiten Helligkeitssensor (3b) in einer bestimmten zweiten Ausrichtung, wobei zumindest durch die Ausrichtungsveränderung, vorzugsweise Verschwenkung, des ersten Helligkeitssensors (3a, 3b) die Reihe an Messpunkten (M1) des ersten Helligkeitssensors (3a) so gestaltet ist, dass zumindest einer dieser lokalen Messpunkte (M1) an einem Ort (PK) auf der Oberfläche (21) liegt, an dem der lokale Messpunkt (M2) mit dem anderen Helligkeitssensor aufgenommen wurde, sodass diese beiden aufgenommenen lokalen Messpunkte (M1, M2) einen gemeinsamen korrelierten Messpunkt (KM) für denselben Ort (PK) auf der Oberfläche (21) darstellen,

- Bestimmen (230) durch eine Auswerteeinheit (4), ob zwei lokale Messpunkte (M1, M2) den korrelierten Messpunkt (MK) darstellen, indem die Auswerteinheit die zeitlich schwankenden Helligkeitsverteilungen der ersten und zweiten lokalen Messpunkte (M1, M2) für die ersten und zweiten Helligkeitssensoren (3a, 3b) bei einer Korrelationsberechnung miteinander vergleicht und dieser Vergleich für den korrelierten Messpunkt ein Maximum an Korrelation bei den verglichenen zeitlich schwankenden Helligkeitsverteilungen ergibt, und

- Bestimmen (240) des Abstands (DM) der Messvorrichtung (1) zu diesem Ort (PK) und damit zum Messobjekt (2) trigonometrisch mittels der Auswerteeinheit (4) aus den sich für die jeweiligen Ausrichtungen ergebenden Winkeln ($\alpha1$, $\alpha2$) der beiden Helligkeitssensoren (3a, 3b) zu dem korrelierten Messpunkt (MK) und der vorbestimmten Entfernung (DH) der Helligkeitssensoren zueinander,

- vorzugsweise mit dem zusätzlichen Schritt des Bestimmens (250) einer Dicke des Messobjektes aus dem bestimmten Abstand (DM) der Messvorrichtung (1) zum Messobjekt (2) und einem vorbestimmten Abstand (DA) zwischen einer Auflage (12) des Messobjekts (2) und der Messvorrichtung (1).

**17.** Ein Verfahren (300) zur Steuerung einer Drehrohrofenanlage (100) nach Anspruch 15, vorzugsweise eine Zementdrehrohrofenanlage (100), umfassend alle Schritte eines Verfahrens nach Anspruch 16 zur optischen Messung eines Abstands (DM) einer Messvorrichtung (1) zu einer der Messvorrichtung (1) zugewandten Oberfläche (21) eines Messobjektes (2), wobei das Messobjekt (2) ein Brenngut (2), vorzugsweise ein Zementklinker, auf einer Brenngutauflage (12, 120) angeordnet in Prozessrichtung der Drehrohrofenanlage (100) hinter einem Ofenausgang (110a) eines Drehrohrofens (110) ist, umfassend den weiteren Schritt

- Bestimmen (250) einer Dicke des Brennguts aus dem bestimmten Abstand (DM) der Messvorrichtung (1) zu der der Messvorrichtung (2) zugewandten Oberfläche (21) des Brennguts und einem vorbestimmten Abstand der Brenngutauflage (12, 120) zur Messvorrichtung (1), und

- Übermitteln (260) der Dicke (DKL) des Brennguts (2) als eine Steuergröße an eine Steuereinrichtung (130) der Drehrohrofenanlage (100) zur Steuerung der Drehrohrofenanlage (100), und

- Steuern (270) der Drehrohrofenanlage (100) unter Berücksichtigung der Dicke des Brennguts (2) als eine der Steuergrößen.

Fig.1

Fig.2

$$\frac{DS}{\sin\gamma} = \frac{DH1}{\sin\alpha} \quad \text{(Sinussatz)}$$

$$DH1 = DS\,\frac{\sin\alpha}{\sin\gamma}$$

$$DM = DH1 * \sin\beta$$

Fig.3

Fig.4

Fig.5

Fig.6

Europäisches Patentamt

European Patent Office

Office européen des brevets

**EUROPÄISCHER RECHERCHENBERICHT**

Nummer der Anmeldung

EP 20 20 5452

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 205 965 A1 (KALKERT PETER [DE]) 16. August 2017 (2017-08-16) * Absätze [0011], [0018], [0028], [0033] - [0036]; Ansprüche 1-15; Abbildungen 1-4 * ----- | 1-17 | INV. F27D21/00 F27D21/02 G01B11/02 F27B7/42 |
| T | US 2021/071953 A1 (ISRAELSEN MARK [US]) 11. März 2021 (2021-03-11) * das ganze Dokument * ----- | 1,13,15, 16 | |
| A | DE 10 2008 029459 A1 (MEL MIKROELEKTRONIK GMBH [DE]) 4. Februar 2010 (2010-02-04) * das ganze Dokument * ----- | 1-14,16, 17 | |
| A | DE 10 2012 111008 A1 (PRECITEC OPTRONIK GMBH [DE]) 15. Mai 2014 (2014-05-15) * das ganze Dokument * ----- | 1-17 | |
| A | DE 10 2017 000296 A1 (BADEN WUERTTEMBERG STIFTUNG GMBH [DE]) 19. Juli 2018 (2018-07-19) * das ganze Dokument * ----- | 1-17 | RECHERCHIERTE SACHGEBIETE (IPC) F27D G01B F27B |

Der vorliegende Recherchenbericht wurde für alle Patentansprüche erstellt

| Recherchenort | Abschlußdatum der Recherche | Prüfer |
|---|---|---|
| München | 19. März 2021 | Gavriliu, Alexandru |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 5452

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2021

| Im Recherchenbericht angeführtes Patentdokument | Datum der Veröffentlichung | Mitglied(er) der Patentfamilie | Datum der Veröffentlichung |
|---|---|---|---|
| EP 3205965 A1 | 16-08-2017 | KEINE | |
| US 2021071953 A1 | 11-03-2021 | US 2021071953 A1 | 11-03-2021 |
| | | US 2021071954 A1 | 11-03-2021 |
| | | WO 2021050734 A1 | 18-03-2021 |
| | | WO 2021050742 A1 | 18-03-2021 |
| DE 102008029459 A1 | 04-02-2010 | DE 102008029459 A1 | 04-02-2010 |
| | | WO 2009153067 A2 | 23-12-2009 |
| DE 102012111008 A1 | 15-05-2014 | CN 104797903 A | 22-07-2015 |
| | | DE 102012111008 A1 | 15-05-2014 |
| | | EP 2920544 A1 | 23-09-2015 |
| | | US 2015260504 A1 | 17-09-2015 |
| | | US 2017234678 A1 | 17-08-2017 |
| | | WO 2014076649 A1 | 22-05-2014 |
| DE 102017000296 A1 | 19-07-2018 | DE 102017000296 A1 | 19-07-2018 |
| | | EP 3568667 A1 | 20-11-2019 |
| | | WO 2018130693 A1 | 19-07-2018 |

EPO FORM P0461

Für nähere Einzelheiten zu diesem Anhang : siehe Amtsblatt des Europäischen Patentamts, Nr.12/82